# EUROPÄISCHE PATENTSCHRIFT

(11) **EP 1 385 794 B1**
(45) Veröffentlichungstag und Bekanntmachung des Hinweises auf die Patenterteilung: **12.05.2010**
(21) Anmeldenummer: 02740442.5
(22) Anmeldetag: 03.04.2002
(51) Int. Cl.: C02F 1/72, C02F 1/20

(54) **VERFAHREN UND VORRICHTUNG ZUR BEHANDLUNG CYANIDHALTIGER FLÜSSIGKEITEN**
METHOD AND DEVICE FOR TREATING LIQUIDS CONTAINING CYANIDE
PROCEDE ET DISPOSITIF DE TRAITEMENT DE LIQUIDES CONTENANT DES CYANURES

(30) Priorität: 03.04.2001 DE 10116371
(43) Veröffentlichungstag der Anmeldung: 04.02.2004
(73) Patentinhaber: A.C.K. Aqua Concept GmbH Karlsruhe, 76189 Karlsruhe (DE)
(72) Erfinder: SÖRENSEN, Martin, 76359 Marxzell (DE); WECKENMANN, Jürgen, 68163 Mannheim (DE)
(74) Vertreter: Patentanwälte Ruff, Wilhelm, Beier, Dauster & Partner
(86) Internationale Anmeldenummer: PCT/EP2002/003648
(87) Internationale Veröffentlichungsnummer: WO 2002/096813

(56) Entgegenhaltungen:
- DE-A- 19 600 774
- US-A- 5 120 451
- US-A- 5 236 557
- US-A- 5 573 676
- PATENT ABSTRACTS OF JAPAN vol. 018, no. 506 (C-1252), 22. September 1994 (1994-09-22) & JP 06 170382 A (NIPPON PARKERIZING CO LTD), 21. Juni 1994 (1994-06-21)

## Beschreibung

Die Erfindung betrifft in erster Linie ein Verfahren zur Behandlung, vorzugsweise wässriger, cyanidhaltiger Flüssigkeiten gemäß dem Oberbegriff des Anspruchs 1. Weiter betrifft die Erfindung eine Vorrichtung zur Behandlung solcher Flüssigkeiten.

Cyanverbindungen, insbesondere Cyanide, sind an zahlreichen technischen Prozessen beteiligt. Sie können dabei als Hilfsstoffe eingesetzt werden oder fallen als Wert- oder Abfallprodukte an.

Bei Flotationsvorgängen werden Cyanide als sogenannte Drückerstoffe eingesetzt. In der Cyanid-Laugerei werden Metalle, insbesondere Edelmetalle, durch Extraktion mit Cyaniden gewonnen. Dabei entstehen Metall-Cyanid-Komplexe, die durch Oxidation aufgeschlossen werden. Cyanidhaltige Flüssigkeiten fallen auch als Abwässer galvanotechnischer Betriebe an. Weiterhin sind auch sogenannte Stripperlösungen zur Entmetallisierung von Werkstückoberflächen oft cyanidbelastet. In den genannten Flüssigkeiten können die Cyanide als freie Cyanide und/oder in komplexgebundener Form enthalten sein.

Der bekannteste Vertreter herkömmlicher Entgiftungsverfahren ist das seit langem in der Galvanotechnik eingesetzte Chlorbleichlaugeverfahren. Dabei werden durch Zugabe von großen Mengen an Chlorbleichlauge zu der zu behandelnden Abwassercharge die Metallionen aus dem cyanidischen Komplex verdrängt und das Cyanid oxidiert. Dabei entsteht ebenfalls Ammonium, welches jedoch mit dem Überschuss der Chlorbleichlauge weiterreagiert und sich über mono-Chloramin und di-Chloramin zu tri-Chloramin umsetzt. Als Nachteile dieses Verfahrens müssen genannt werden:
- Hoher Chlorbleichlaugeverbrauch, da diese Lauge in großem Überschuss zugegeben werden muss, weil ein großer Teil der Chlorbleichlauge mit dem bei der Entgiftung entstehenden Ammonium abreagiert.
- Bildung von an Aktivkohle absorbierbaren organischen Halogenverbindungen, die mit dem dem Fachmann bekannten Summenparameter AOX gemessen und bewertet werden.

Beim Chlorbleichlaugeverfahren ist die Problematik der Komplexierung von Metallionen durch Ammonium aufgrund der chemischen Umsetzung von Ammonium mit dem Chlor über mono-Chloramin und di-Chloramin zum tri-Chloramin von vergleichsweise geringer Bedeutung. Tri-Chloramin besitzt nämlich keine merkliche Komplexierungskonstante für Metalle. Allerdings sind diese Verbindungen im Abwasser unerwünscht, da sie die Biologie von Kläranlagen und Gewässern nachhaltig stören. Darüber hinaus entstehen bei der Entgiftung mittels Chlorbleichlauge, wie bereits erwähnt, chlororganische Verbindungen (AOX).

In diesem Zusammenhang offenbart die US 5,120,451 ein Verfahren zur Reduzierung des Cyanidgehalts einer Lösung, die sowohl Cyanidionen als auch gelöstes Ammoniak enthält. Dabei wird Chlorbleichlauge (Natriumhypochlorit) eingesetzt und die so behandelte Lösung mit einem Luftstrom beaufschlagt. Die oben angesprochene Problematik, insbesondere des hohen Chlorbleichlaugeverbrauchs, wird durch das Verfahren gemäß dieser US-Patentschrift allerdings nicht vermieden.

Die ebenfalls bekannte herkömmliche UV-Oxidation besitzt gegenüber dem Chlorbleichlaugeverfahren den Vorteil, dass kein AOX gebildet wird, im Gegenteil, eventuell vorhandener AOX wird abgebaut. Allerdings entsteht Ammonium, welches zwar nicht toxisch ist, jedoch eine vollständige Metallfällung verhindert. Die vollständige Metallfällung ist aber eines der wesentlichen Ziele der Cyanidentgiftung, unabhängig vom angewendeten Verfahren.

Bei der herkömmlichen UV-Oxidation ist ein oft beobachtetes Phänomen, dass eine behandelte Charge zurückbleibt, die kurz nach Behandlungsende den angestrebten oder gesetzlich vorgeschriebenen Grenzwert für Metalle zwar einhält, aber bereits nach kurzer Zeit den Grenzwert wieder überschreitet, da gebildete Komplexe mit anderen Komplexbildnern (als Cyanid) eine Metallfällung behindern. Ein deutliches Zeichen dieser Problematik ist das "Blauwerden" von Kupfercyan-Lösungen nach der Cyanidentgiftung durch den Kupfer-tetramin-Komplex.

Das Verfahren der herkömmlichen UV-Oxidation ist dem Fachmann bekannt. Dabei wird die wässrige, cyanidhaltige Flüssigkeit üblicherweise mit mindestens einem Oxidationsmittel, vorzugsweise einem Peroxid wie Wasserstoffperoxid versetzt. Das Oxidationsmittel baut die freien und komplexgebundenen Cyanide in der Flüssigkeit ab. Zusätzlich wird dabei mit UV-Licht bestrahlt. Das UV-Licht dient dabei zur Initiierung der Cyanidabbaureaktion. Es kann beispielsweise UV-Licht mit einer Wellenlänge von 153 nm bis 405 nm, d.h. aus dem gesamten UV-Spektrum, eingesetzt werden. Vorzugsweise wird jedoch energiereiches UV-B-Licht der Wellenlänge von 280 nm bis 320 nm oder UV-C-Licht der Wellenlänge von 200 nm bis 280 nm eingesetzt. Häufig werden langgestreckte, beispielsweise röhrenartige UV-Lampen für diesen Zweck verwendet. Hierbei können Werte für die Energiedichte von vorzugsweise 100 bis 200 W/cm Lampenlänge angegeben werden.

Als Stand der Technik kann beispielsweise auf die WO 00/06498 der Anmelderin verwiesen werden. Dort sind auch Nachbehandlungsschritte für bei der Behandlung entstandene gasförmige Produkte, nämlich Cyanwasserstoff, Sauerstoff und/oder Kohlendioxid dargestellt. Die oben geschilderte Problematik ist jedoch nicht angesprochen.

Die Erfindung stellt sich dementsprechend die Aufgabe, die oben geschilderten Nachteile des Standes der Technik zu vermeiden. Insbesondere sollen die mit dem Entstehen von Ammonium verbundenen Probleme zuverlässig gelöst und dementsprechend die angestrebten Grenzwerte erreicht werden.

Diese Aufgabe wird gelöst durch das Verfahren mit den Merkmalen des Anspruchs 1 und die Vorrichtung mit den Merkmalen des Anspruchs 18. Bevorzugte Ausführungsformen des erfindungsgemäßen Verfahrens sind in den abhängigen Ansprüchen 2 bis 17 beschrieben. Der Wortlaut sämtlicher Ansprüche wird hiermit durch Bezugnahme zum Inhalt dieser Beschreibung gemacht.

Mit dem erfindungsgemäßen Verfahren werden die prozesstechnischen Voraussetzungen dafür geschaffen, die Ammonium-Metall-Komplexe, die wie alle Verbindungen dem Massenwirkungsgesetz unterliegen, über das Austreiben (Strippen) des Ammoniums über die Gasphase zu spalten. Nach dieser Umsetzung liegen die Metallionen wieder frei in der Lösung vor und können durch eine klassische Fällung und ggf. in Zusammenhang mit einer Sorption an sogenannte Selektivtauscher nach dem Stand der Technik aus dem Abwasser eliminiert werden. Das Wesen des erfindungsgemäßen Verfahrens besteht demnach in der Nach-/Weiterbehandlung von Chargen nach einer Oxidations- und UV-Behandlung, die zu neuen Metallkomplexen führt. Dabei wird die Charge um eine erfindungsgemäße Verfahrenstechnik ergänzt, die die entstandenen Komplexe zerstört und mit folgenden Vorteilen verbunden ist:
- Keine Bildung von Metall-Ammoniumkomplexen
- Einfache Metallfällung
- Vollständige Entgiftung
- Automatisierbarkeit des Gesamtprozesses, weil insbesondere Fehlfunktionen sicherheitstechnisch abgefangen werden
- Sichere Einhaltung der Metallgrenzwerte nach anschließender Fällung und Selektivsorption am Kationentauscher

Die Berücksichtigung von Anspruch 3 trägt der Tatsache Rechnung, dass Amine in Abhängigkeit ihres pKₛ-Werts zu einem optimalen pH-Wert für die Verschiebung des Gleichgewichts zwischen den verschiedenen Säure- und Basepaaren führen. Amine lassen sich nur in der nicht protonierten Basenform austreiben bzw. strippen, während die protonierten Formen keinen messbaren Dampfdruck aufweisen. Da der Partialdruck einiger anorganischer Komplexbildner vom pH-Wert der Lösung abhängt und eine gleichzeitige Fällung der Zentralionen vorteilhaft ist, bewegt sich der optimale pH-Wertbereich wie in Anspruch 3 dargestellt, zwischen pH=9 bis pH=14.

Eine weitere vorteilhafte Weiterbildung des erfindungsgemäßen Verfahrens gibt Anspruch 4 wieder. Dort sind bevorzugte Oxidationsmittel genannt.

Nach Anspruch 5 wird Luft als Trägergas verwendet, die entsprechend Anspruch 6 vorzugsweise durch ein Gebläse erzeugt wird, oder entsprechend in ganz besonderen Fällen wie in Anspruch 7 aufgeführt, durch ein flüssigkeitsgetriebenes Gasgebläse. Zur Erhöhung der Effizienz kann der Kontakt zwischen dem Trägergasstrom nicht nur, wie in Anspruch 8 aufgeführt, durch eine Belüftung im Chargenbehälter durchgeführt werden, sondern insbesondere auch, wie in Anspruch 9 dargestellt, in einem separaten Stoffübergangsapparat, der zur Erhöhung der Oberflächen mit Füllkörpern gefüllt sein kann. Die Führung des Gasstroms in dem Stoffübergangsapparat kann im Gleichstrom, oder im Gegen- oder Kreuzstrom erfolgen. Entsprechend Anspruch 10 kann der Stoffübergangsapparat zur Erhöhung der (Kontakt-)Oberfläche zwischen Gasphase und Flüssigphase mit Füllkörpern gefüllt oder mit Sprühdüsen bestückt sein. Unter besonderen Bedingungen erweist sich die Ausführung des Stoffübergangsapparats als Bodenkolonne entsprechend Anspruch 11 als vorteilhaft.

Bei optimalen Voraussetzungen kann der Prozess entsprechend Anspruch 12 nach einmaligem Durchlaufen des Stoffübergangsapparats abgeschlossen sein. Bei langsamen Reaktionen erweist sich die mehrfache Wiederholung der Nachbehandlung gemäß Anspruch 13 als vorteilhaft, um die anorganischen Komplexbildner zu eliminieren.

Die Zuführung von thermischer Energie beschleunigt die Kinetik des Prozesses, daher ist die Erwärmung gemäß Anspruch 14 vorteilhaft. Dabei kann die Energie auf verschiedene Weise erzeugt und zugeführt werden. Anspruch 15 beschreibt die Erwärmung mittels elektrischer Energie durch Tauchheizungen, Anspruch 16 mittels UV-Bestrahlung, wobei diese noch den Vorteil der weiteren Oxidation von organischen Inhaltsstoffen beinhaltet. Anspruch 17 beschreibt die Anwendung einer Warmwasserheizung mittels Wärmeüberträger zur Zuführung der thermischen Energie.

Die beschriebenen sowie weiteren Merkmale der Erfindung ergeben sich aus den nachfolgenden Beispielen, der Figur und den Unteransprüchen. Hierbei können die einzelnen Merkmale jeweils für sich oder in Kombination miteinander verwirklicht sein.

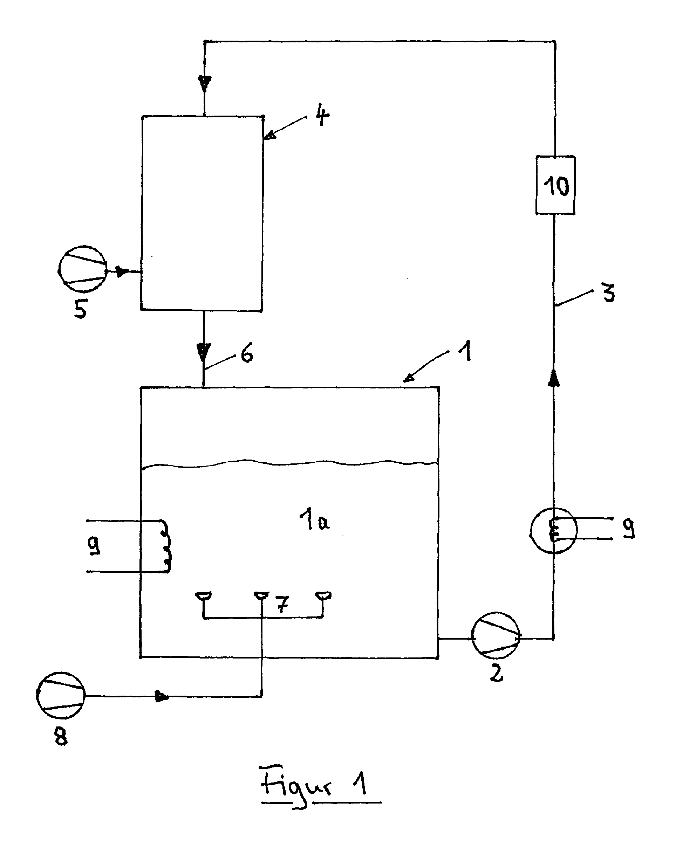

In den Zeichnungen zeigen
- Figur 1: das Blockschaltbild einer erfindungsgemäßen Vorrichtung, dem auch die erfindungsgemäße Verfahrensweise zu entnehmen ist.

Die entgiftete ehemals cyanidhaltige Flüssigkeit (1a) gemäß Figur 1 ist im Chargenbehälter (1) vorgelegt. Die Flüssigkeit wird mittels der Pumpe (2) durch die Leitungen (3) über den Stoffübergangsapparat (4) geführt, in den ein Gebläse (5) Gas (hier Luft) in den Flüssigkeitsstrom trägt. Die an Ammonium abgereicherte Lösung tritt über den Rücklauf (6) in den Behälter zurück. Im Chargenbehälter sind Belüfter (7) montiert, über die ein Gebläse (8) die Flüssigkeit (hier mit Luft) begast, um Ammonium auszublasen. Die Heizungen (9) zur Erwärmung der Flüssigkeit können (wie gezeigt) in den Behälter oder in die Rohrleitungen eingebaut werden. Die UV-Behandlung (10) ist üblicherweise in die Rohrleitungen eingebaut.

### Anwendungsbeispiele

### Anwendungsbeispiel 1:

4 m³ Kupfercyanid-Abwasser mit einem Cyanidgehalt von ca. 38 kg werden mit Wasserstoffperoxid versetzt, danach bei abgesenktem pH-Wert in üblicher Weise mit UV-Licht bestrahlt. Nach der abgeschlossenen UV-Behandlung beträgt die Cyanidkonzentration ca. 0,1 mg/l. Der Wert von Kupfer nach einer Fällungsprobe beträgt 17,3 mg/l. Erst nach der Nach-/Weiterbehandlung des Abwassers und dem gemäß Figur 1 vorgenommenen Ausstrippen des Ammoniums lassen sich durch die Fällung/Filtration befriedigende Metallwerte erzielen. Im gefällten Abwasser sind noch 0,46 mg/l Kupfer gelöst.

### Anwendungsbeispiel 2:

1 m³ Abwasserkonzentrat mit einem Cyanidgehalt von ca. 63 kg enthält neben Nickel noch erhebliche Mengen Eisen. Nach der Dosierung von Wasserstoffperoxid wird bei abgesenktem pH-Wert unter weiterer Zugabe von Wasserstoffperoxid in üblicher Weise mit UV-Licht bestrahlt.

Nach der abgeschlossenen UV-Behandlung beträgt die Cyanidkonzentration ca. 0,2 mg/l. Der Wert von Nickel nach einer Fällungsprobe beträgt 3,8 mg/l, der von Eisen beträgt 0,31 mg/l. Erst nach der Nach-/Weiterbehandlung des Abwassers und dem gemäß Figur 1 vorgenommenen Ausstrippen des Ammoniums lassen sich durch die Fällung/Filtration befriedigende Nickelwerte erzielen. Im gefällten Abwasser sind nur noch 0,44 mg/l Nickel gelöst.

## Patentansprüche

1. Verfahren zur Behandlung, vorzugsweise wässriger, cyanidhaltiger Flüssigkeiten, bei dem die Flüssigkeit mit mindestens einem Oxidationsmittel in Kombination mit UV-Licht, insbesondere in einem sogenannten Chargenbehälter, behandelt wird, **dadurch gekennzeichnet, dass** die so behandelte Flüssigkeit in mindestens einem Nach-/Weiterbehandlungsschritt in intensiven Kontakt mit einem Gasstrom gebracht wird, so dass ein Stoffstrom von der Flüssigphase in die Gasphase übergeht.

2. Verfahren nach Anspruch 1, **dadurch gekennzeichnet, dass** über den Gasstrom in der Flüssigkeit vorhandenes oder gebildetes Ammonium ausgetrieben wird.

3. Verfahren nach Anspruch 1 oder Anspruch 2, **dadurch gekennzeichnet, dass** die Flüssigkeit im Nachbehandlungsschritt bei einem pH-Wert von mindestens 7, vorzugsweise bei einem pH-Wert von > 9, insbesondere bei einem pH-Wert zwischen 9 und 14 mit dem Gasstrom in Kontakt gebracht wird.

4. Verfahren nach einem der vorhergehenden Ansprüche, **dadurch gekennzeichnet, dass** es sich bei dem Oxidationsmittel um ein Peroxid, insbesondere um Wasserstoffperoxid handelt.

5. Verfahren nach einem der vorhergehenden Ansprüche, **dadurch gekennzeichnet, dass** der Gasstrom Luft ist.

6. Verfahren nach einem der vorhergehenden Ansprüche, **dadurch gekennzeichnet, dass** der Gasstrom durch mindestens ein Gebläse gefördert wird.

7. Verfahren nach einem der vorhergehenden Ansprüche, **dadurch gekennzeichnet, dass** der Gasstrom durch mindestens ein Strahlgebläse nach dem Venturi-Prinzip gefördert wird.

8. Verfahren nach einem der vorhergehenden Ansprüche, **dadurch gekennzeichnet, dass** der Gasstrom durch mindestens einen Belüfter in einen Flüssigkeitstank, insbesondere den Chargenbehälter, eingebracht wird.

9. Verfahren nach einem der vorhergehenden Ansprüche, **dadurch gekennzeichnet, dass** der intensive Kontakt mit dem Gasstrom in mindestens einem Stoffübergangsapparat vorgenommen wird, in dem das Gas und die Flüssigkeit im Gegenstrom, im Kreuzstrom oder im Kreuzgegenstrom in intensiven Kontakt gebracht werden.

10. Verfahren nach Anspruch 9, **dadurch gekennzeichnet, dass** der Stoffübergangsapparat mindestens eine Füllkörperkolonne oder mindestens eine Sprühkolonne ist.

11. Verfahren nach Anspruch 9, **dadurch gekennzeichnet, dass** der Stoffübergangsapparat mindestens eine Bodenkolonne ist.

12. Verfahren nach einem der Ansprüche 9 bis 11, **dadurch gekennzeichnet, dass** die Flüssigkeit nach nur einmaligem Durchströmen des Stoffübergangsapparats das Gesamtsystem verlässt.

13. Verfahren nach einem der Ansprüche 9 bis 11, **dadurch gekennzeichnet, dass** die Flüssigkeit nach Durchströmen des Stoffübergangsapparats in den Chargenbehälter zurückfließt und dann erneut über den Stoffübergangsapparat gepumpt wird.

14. Verfahren nach einem der vorhergehenden Ansprüche, **dadurch gekennzeichnet, dass** der zu behandelnden Flüssigkeit während der Nachbehandlung mit dem Gasstrom thermische Energie zugeführt wird.

15. Verfahren nach Anspruch 14, **dadurch gekennzeichnet, dass** die thermische Energie elektrisch erzeugt wird und vorzugsweise über Tauchheizungen in die Flüssigkeit eingebracht wird.

16. Verfahren nach Anspruch 14, **dadurch gekennzeichnet, dass** die thermische Energie über einen UV-Reaktor in die Flüssigkeit eingebracht wird.

17. Verfahren nach Anspruch 14, **dadurch gekennzeichnet, dass** die thermische Energie über einen Wärmeübertrager in die Flüssigkeit eingebracht wird.

18. Vorrichtung zur Behandlung, vorzugsweise wässriger, cyanidhaltiger Flüssigkeiten, mit einem Behälter (1) zur Aufnahme der Flüssigkeit, mindestens einem Gebläse (5, 8) zur Beaufschlagung der Flüssigkeit mit einem Gasstrom, sowie
- einer Pumpe (2),
- einem Stoffübergangsapparat (4),
- mindestens einer Heizung (9), und
- mindestens einer UV-Behandlungseinrichtung (10).

## Claims

1. Method for treating, preferably aqueous, cyanide-containing liquids, in which the liquid is treated with at least one oxidizing agent in combination with UV light, in particular in what is termed a batch container, **characterized in that** the thus-treated liquid is brought into intensive contact with a gas stream in at least one post-/further-treatment step in such a manner that a material stream passes over from the liquid phase into the gas phase.

2. Method according to Claim 1, **characterized in that** ammonium which is present or formed in the liquid is expelled via the gas stream.

3. Method according to Claim 1 or Claim 2, **characterized in that** the liquid is brought into contact with the gas stream in the post-treatment step at a pH of at least 7, preferably at a pH of > 9, in particular at a pH between 9 and 14.

4. Method according to any one of the preceding claims, **characterized in that** the oxidizing agent is a peroxide, in particular hydrogen peroxide.

5. Method according to any one of the preceding claims, **characterized in that** the gas stream is air.

6. Method according to any one of the preceding claims, **characterized in that** the gas stream is transported by at least one blower.

7. Method according to any one of the preceding claims, **characterized in that** the gas stream is transported by at least one jet blower according to the Venturi principle.

8. Method according to any one of the preceding claims, **characterized in that** the gas stream is introduced into a liquid tank, in particular the batch container, by at least one aerator.

9. Method according to any one of the preceding claims, **characterized in that** the intensive contact with the gas stream is performed in at least one mass transfer apparatus in which the gas and the liquid are brought into intensive contact in counterflow, in crossflow or in cross-counterflow.

10. Method according to Claim 9, **characterized in that** the mass transfer apparatus is at least one packed column or at least one spray column.

11. Method according to Claim 9, **characterized in that** the mass transfer apparatus is at least one tray column.

12. Method according to any one of Claims 9 to 11, **characterized in that** the liquid leaves the overall system after only a single passage through the mass transfer apparatus.

13. Method according to any one of Claims 9 to 11, **characterized in that** the liquid, after passage through the mass transfer apparatus, flows back into the batch container and is then again pumped through the mass transfer apparatus.

14. Method according to any one of the preceding claims, **characterized in that**, during the aftertreatment with the gas stream, thermal energy is supplied to the liquid to be treated.

15. Method according to Claim 14, **characterized in that** the thermal energy is electrically generated and is preferably introduced into the liquid via immersion heaters.

16. Method according to Claim 14, **characterized in that** the thermal energy is introduced into the liquid via a UV reactor.

17. Method according to Claim 14, **characterized in that** the thermal energy is introduced into the liquid via heat exchanger.

18. Device for treating, preferably aqueous, cyanide-containing liquids, having a container (1) for receiving the liquid, at least one blower (5, 8) for charging the liquid with a gas stream, and also
- a pump (2),
- a mass transfer apparatus (4),
- at least one heater (9), and
- at least one UV treatment appliance (10).

## Revendications

1. Procédé pour le traitement de liquides, de préférence aqueux, contenant des cyanures, dans lequel on traite le liquide par au moins un oxydant en association avec de la lumière UV, en particulier dans un récipient dit à charges, **caractérisé en ce que** dans au moins une étape de post-traitement/traitement ultérieur le liquide ainsi traité est mis en contact intense avec un courant de gaz, de sorte qu'un courant de substance passe de la phase liquide dans la phase gazeuse.

2. Procédé selon la revendication 1, **caractérisé en ce que** de l'ammonium formé ou présent dans le liquide est chassé par le courant de gaz.

3. Procédé selon la revendication 1 ou la revendication 2, **caractérisé en ce que** dans l'étape de post-traitement le liquide est mis en contact à un pH d'au moins 7, de préférence à un pH de > 9, en particulier à un pH compris entre 9 et 14 avec le courant de gaz.

4. Procédé selon l'une quelconque des revendications précédentes, **caractérisé en ce que** l'oxydant consiste en un peroxyde, en particulier un peroxyde d'hydrogène.

5. Procédé selon l'une quelconque des revendications précédentes, **caractérisé en ce que** le courant de gaz est de l'air.

6. Procédé selon l'une quelconque des revendications précédentes, **caractérisé en ce que** le courant de gaz est envoyé par au moins une soufflante.

7. Procédé selon l'une quelconque des revendications précédentes, **caractérisé en ce que** le courant de gaz est envoyé par au moins une soufflante à jet selon le principe Venturi.

8. Procédé selon l'une quelconque des revendications précédentes, **caractérisé en ce que** le courant de gaz est introduit par au moins un ventilateur dans un récipient de liquide, en particulier le récipient à charges.

9. Procédé selon l'une quelconque des revendications précédentes, **caractérisé en ce que** le contact intense avec le courant de gaz est effectué dans au moins un appareil de transfert de substances, dans lequel le gaz et le liquide sont mis en contact intense à contre-courant, en courant croisé ou à contre-courant croisé.

10. Procédé selon la revendication 9, **caractérisé en ce que** l'appareil de transfert de substances est au moins une colonne à corps de garnissage ou au moins une colonne à pulvérisation.

11. Procédé selon la revendication 9, **caractérisé en ce que** l'appareil de transfert de substances est au moins une colonne à plateaux.

12. Procédé selon l'une quelconque des revendications 9 à 11, **caractérisé en ce qu'**après un seul passage dans l'appareil de transfert de substances, le liquide quitte l'ensemble du système.

13. Procédé selon l'une quelconque des revendications 9 à 11, **caractérisé en ce qu'**après être passé dans l'appareil de transfert de substances, le liquide retourne dans le récipient à charges et est à nouveau pompé sur l'appareil de transfert de substances.

14. Procédé selon l'une quelconque des revendications précédentes, **caractérisé en ce que** pendant le post-traitement de l'énergie thermique est envoyée par le courant de gaz au liquide à traiter.

15. Procédé selon la revendication 14, **caractérisé en ce que** l'énergie thermique est produite électriquement et introduite dans le liquide de préférence par des chauffages par immersion.

16. Procédé selon la revendication 14, **caractérisé en ce que** l'énergie thermique est introduite dans le liquide par un réacteur UV.

17. Procédé selon la revendication 14, **caractérisé en ce que** l'énergie thermique est introduite dans le liquide par un échangeur de chaleur.

18. Dispositif pour le traitement de liquides, de préférence aqueux, contenant des cyanures, comportant un récipient (1) pour la réception du liquide, au moins une soufflante (5, 8) pour l'apport d'un courant de gaz au liquide, ainsi qu'
- une pompe (2),
- un appareil de transfert de substances (4),
- au moins un chauffage (9), et
- au moins un dispositif de traitement UV (10).
